# EUROPÄISCHE PATENTSCHRIFT

(11) **EP 2 786 439 B1**
(45) Veröffentlichungstag und Bekanntmachung des Hinweises auf die Patenterteilung: **31.08.2016**
(21) Anmeldenummer: 11793335.8
(22) Anmeldetag: 30.11.2011
(51) Int. Cl.: H01M 2/02, H01M 2/10, H01M 10/04

(54) **FLACHZELLE FÜR EIN AKKUPACK**
FLAT CELL FOR A RECHARGEABLE BATTERY PACK
CELLULE PLATE POUR BLOC D'ACCUMULATEURS

(43) Veröffentlichungstag der Anmeldung: 08.10.2014
(73) Patentinhaber: ads-tec GmbH, 72622 Nürtingen (DE)
(72) Erfinder: SPEIDEL, Thomas, 71706 Markgröningen (DE); BOHNER, Matthias, 70376 Stuttgart (DE)
(74) Vertreter: Wasmuth, Rolf
(86) Internationale Anmeldenummer: PCT/EP2011/006007
(87) Internationale Veröffentlichungsnummer: WO 2013/079080

(56) Entgegenhaltungen:
- EP-A2- 2 339 683
- DE-A1-102008 061 277
- DE-A1-102009 013 346
- DE-A1-102010 036 062
- JP-A- 2001 256 934
- JP-A- 2008 204 816
- US-A1- 2006 286 450

## Beschreibung

Die Erfindung betrifft eine Flachzelle für einen Akkupack der im Oberbegriff des Anspruchs 1 genannten Gattung.

Flachzellen für Akkupacks sind bekannt, wobei die Flachzellen in einem Gehäuse eines Akkupacks mechanisch gehalten sind. Hierzu sind separate Befestigungsmittel erforderlich, die nach dem Einsetzen der Flachzellen in das Gehäuse angebracht werden. Solche Flachzellen bestehen aus wechselweise aufeinandergeschichteten Anodenfolien und Kathodenfolien, die jeweils durch Separatorfolien voneinander getrennt in einem Foliengehäuse angeordnet sind. Das Foliengehäuse weist eine umlaufende Siegelnaht auf, um eine im Foliengehäuse vorgesehene Elektrolytlösung dicht einzuschließen.

Aus der JP 2008-204816 A ist bekannt, solche Flachzellen mit einem Rahmen zu versehen, der an der umlaufenden Siegelnaht angebracht ist und den Umfangsrand der Flachzellen umgibt. Dieser Rahmen verleiht der Siegelnaht eine größere Stabilität und dient zur Abstützung der Akkuzelle auf einem Gehäuseboden sowie zur Fixierung im Gehäuse des Akkupacks mittels der oben genannten Befestigungsmittel. Diese Rahmenkonstruktionen führen zu einem entsprechenden Herstellungsaufwand.

Die EP 2 339 683 A2 zeigt einen Akkupack, der aus mehreren Flachzellen mit Foliengehäuse besteht. In den Folienrändern sind Haltestäbe eingeschlagen, mit denen die Flachzellen in dem Gehäuse eines Akkupacks befestigt werden können.

Der Erfindung liegt die Aufgabe zugrunde, eine in der Herstellung kostengünstige Flachzelle für einen Akkupack zu schaffen, die einfach im Aufbau ist.

Die Aufgabe wird durch eine Flachzelle mit den Merkmalen des Anspruchs 1 gelöst.

Die Anbringung von Halteleisten an Flachzellen ist wesentlich einfacher, und der Materialaufwand ist geringer. Toleranzen werden vermieden bzw. können einfacher ausgeglichen werden. Außerdem wird der Platzbedarf im Gehäuse eines Akkupacks reduziert und wegen der Materialersparnis das Gewicht verringert.

Die Halteleisten bestehen aus zwei Leistenteilen, die an der Siegelnaht zusammengefügt sind. Die Leistenteile sind mit einem zur Flachzelle gerichteten Schenkel versehen, und zwischen den Schenkeln der zusammengefügten Leistenteile ist ein Spalt gebildet, in dem die Siegelnaht aufgenommen ist.

Es wird an beiden seitlichen Siegelnähten der Flachzelle eine Halteleiste befestigt, wodurch am unteren Rand der Flachzelle keine Halteleiste erforderlich ist.

Vorteilhaft ist ein den Spalt füllender Kleber vorgesehen.

Gemäß einer Ausgestaltung der Erfindung besteht ein Akkupack aus einer Mehrzahl einzelner Flachzellen, die in einem gemeinsamen Gehäuse mechanisch gehalten sind, wozu in dem Gehäuse Vorrichtungen zur Aufnahme der Halteleisten vorgesehen sind. Vorteilhaft ist vorgesehen, dass die Vorrichtung zur Aufnahme der Halteleisten an der Innenseite einer Gehäusewand ausgebildete Aufnahmenuten sind. Auf diese Weise entfallen zusätzliche Befestigungsmittel, und die Flachzellen werden beim Einbringen in das Gehäuse gleichzeitig positioniert. Es ist außerdem vorteilhaft, dass die Halteleisten mindestens mit einem ihrer Enden über den Rand der Siegelnaht überstehen und Anlageflächen zur Abstützung an einem Gehäuseboden oder Gehäusedeckel aufweisen. Damit wird auch die Abstützung der Flachzelle in Längsrichtung der Halteleisten von den Halteleisten übernommen, so dass die Siegelnähte am oberen und unteren Rand der Flachzelle nicht am Gehäuse anliegen und damit keine mechanische Belastung durch das Gehäuse erfahren. Es wird als zweckmäßig angesehen, dass die Enden der Halteleisten etwa 0,5 mm bis 1,5 mm überstehen, vorzugsweise sollte dieser Überstand etwa 1,0 mm betragen.

Vorzugsweise bestehen die Halteleisten aus Kunststoff und sind als Strangmaterial hergestellt und auf die gewünschte Länge geschnitten. Alternativ können die Halteleisten auch als Spritzgussteil gefertigt sein. Derartige Halteleisten können einfach und billig hergestellt werden und sind an die jeweiligen Maße der Flachzelle anpassbar. Es ist außerdem vorteilhaft, dass die Aufnahmenuten jeweils einen breiteren Innenabschnitt und einen engeren Schlitz aufweisen, wobei die Halteleisten in die Aufnahmenuten in deren Längsrichtung einschiebbar sind. Dadurch ist eine formschlüssige Fixierung in allen Richtungen gegeben, und in Längsrichtung der Halteleisten erfolgt die Abstützung über die bereits erwähnten Anlageflächen der Halteleisten.

Dabei ist es zweckmäßig, dass die Leistenteile identische Profile aufweisen und an einer Anlagefläche zusammengefügt sind. Durch die Ausbildung als identische Leistenteile ist die Herstellung nur eines Profils erforderlich.

Gemäß einer alternativen Ausgestaltung der Aufnahmenuten besitzen diese einen Innenabschnitt, der aus zwei Außenbereichen und einem konkaven Mittelbereich gebildet ist. Für eine solche Form der Aufnahmenuten ist die Halteleiste aus zwei Haltebacken gebildet, die über ein Filmscharnier verbunden sind, wobei die Haltebacken an die Form der Außenbereiche der Aufnahmenuten angepasst sind. Die Halteleisten werden vorzugsweise mittels eines Klebers mit den Siegelnähten der Flachzellen verbunden. Um die Siegelnaht am unteren Rand der Flachzellen auch bei extremen Stößen auf das Gehäuse des Akkupacks zu schützen, wird vorgeschlagen, dass die Halteleisten über Federn an einem Gehäuseboden abgestützt sind. Solche Federn können aus Metall oder Kunststoff bestehen, wobei es möglich ist, jeder Flachzelle eine Feder zuzuordnen oder eine sich über die gesamte Länge des Akkupacks erstreckende Feder vorzusehen.

Eine besonders vorteilhafte Ausgestaltung der Flachzelle besteht darin, dass das Foliengehäuse aus einer Folie gebildet ist, die am unteren Rand eines die Flachzelle bildenden Folienpakets umgeschlagen und an dessen Flachseiten angelegt ist, derart, dass die Folie an den seitlichen Rändern und am oberen Rand mittels einer Siegelnaht geschlossen ist. Dies führt zu einer einfacheren Fertigung des Foliengehäuses, da an der unteren Kante der Flachzelle keine Schweiß- bzw. Siegelnaht angebracht werden muss. Dies führt nicht nur zu einer höheren Sicherheit im Hinblick auf die Dichtheit, sondern auch zu einem Platzgewinn, wodurch die Energiedichte des Akkublocks steigt.

Ausführungsbeispiele der Erfindung sind nachstehend anhand der Zeichnung näher erläutert. In der Zeichnung zeigt:
- Fig. 1: eine perspektivische Darstellung eines Ausschnitts eines Akkupacks mit nebeneinander angeordneten Flachzellen, die an einer Gehäusewand gehalten sind,
- Fig. 2: eine vergrößerte Darstellung der Einzelheit II in Fig. 1,
- Fig. 3: eine Vorderansicht einer Flachzelle mit seitlich an dieser angeordneten Halteleisten,
- Fig. 4: eine Ansicht der Flachzelle in Richtung des Pfeils IV in Fig. 3,
- Fig. 5: eine vergrößerte Darstellung der Einzelheit V in Fig. 4,
- Fig. 6: eine perspektivische Ansicht der Flachzelle mit angebrachten bzw. anzubringenden Halteleisten,
- Fig. 7: eine Ansicht auf mehrere Flachzellen von oben,
- Fig. 8: eine vergrößerte Darstellung der Einzelheit VIII in Fig. 7,
- Fig. 9: eine Ausführungsvariante zu Fig. 7,
- Fig. 10: eine vergrößerte Darstellung der Einzelheit X in Fig. 9,
- Fig. 11: eine Anordnung gemäß Fig. 1 in einer perspektivischen Darstellung schräg von unten,
- Fig. 12: eine vergrößerte Darstellung der Einzelheit XII in Fig. 11,
- Fig. 13: eine andere Ansicht der Einzelheit XII,
- Fig. 14: die Fertigung einer Flachzelle durch Umschlagen einer Folie als Foliengehäuse,
- Fig. 15: eine nach Fig. 14 gefertigte Flachzelle.

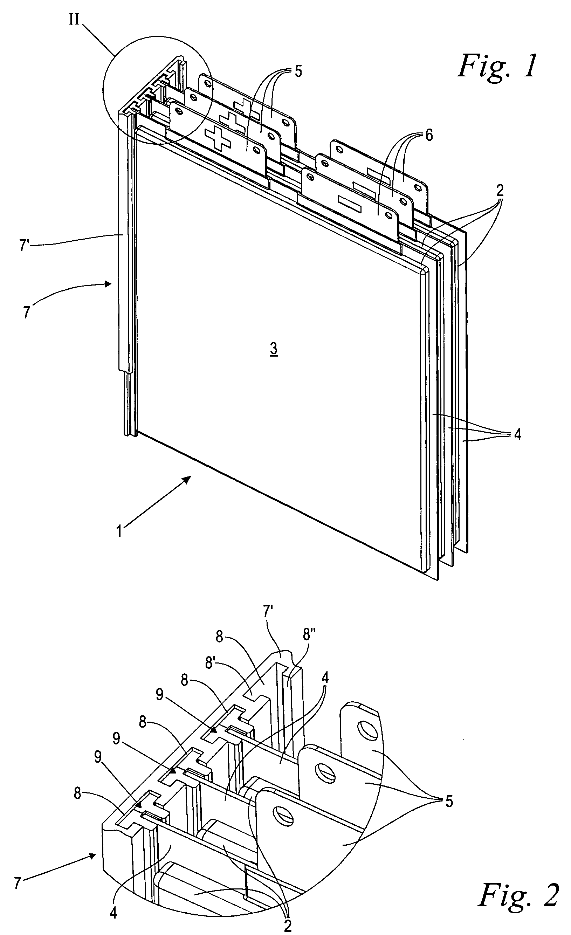

Die Fig. 1 zeigt einen Ausschnitt eines Akkupacks 1, der mehrere parallel nebeneinander angeordnete Flachzellen 2 umfasst. Jede Flachzelle 2 weist ein Foliengehäuse 3 auf, das entlang seiner Ränder durch eine Siegelnaht 4 hermetisch geschlossen ist. Durch die Siegelnaht 4 ragen an dem nach oben gerichteten Rand der Flachzelle 2 jeweils elektrische Kontakte 5 und 6. Die Flachzellen 2 sind in einem Gehäuse 7 des Akkupacks 1 angeordnet, wobei die Flachzellen 2 an einer Gehäusewand 7' befestigt sind, wie nachfolgend noch näher erläutert wird.

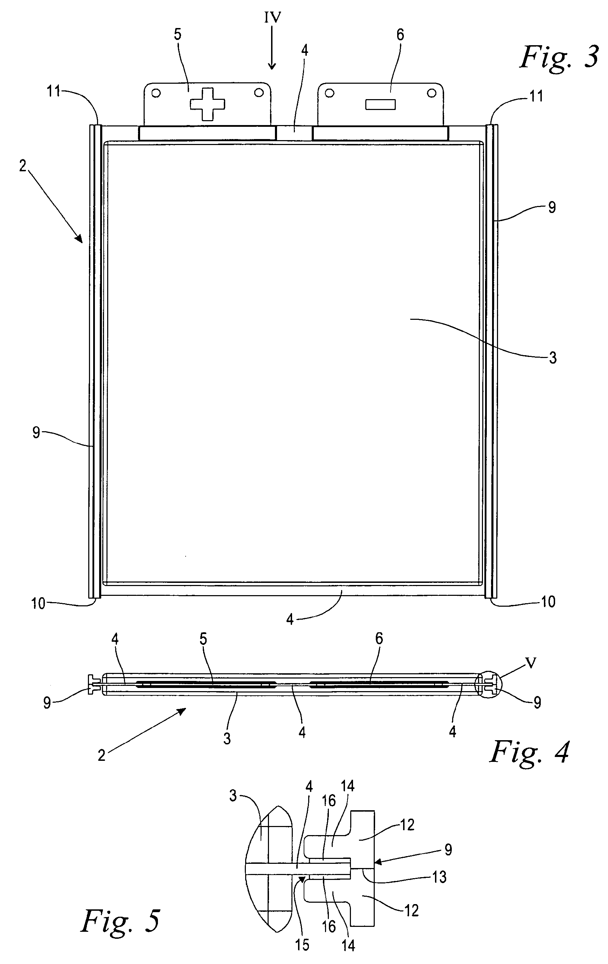

In Fig. 2 ist vergrößert die Einzelheit II aus Fig. 1 dargestellt, woraus ersichtlich ist, dass in der Gehäusewand 7' Aufnahmenuten 8 für seitlich an den Flachzellen 2 befindliche Siegelnähte 4 vorgesehen sind. Die Querschnittsform der Aufnahmenuten 8 ist so gestaltet, dass ein breiterer Innenabschnitt 8' und engerer Schlitz 8" gebildet sind. An den entlang der Gehäusewand 7' verlaufenden Siegelnähten 4 sind Halteleisten 9 befestigt, die mit den Siegelnähten 4 in die Aufnahmenuten 8 eingeschoben sind. Durch den Formschluss, der durch die Querschnitte der Aufnahmenuten 8 und Halteleisten 9 gegeben ist, wird eine sichere Fixierung der Flachzellen 2 in dem Gehäuse 7 erreicht. Die Halteleisten 9 bestehen bei diesem Ausführungsbeispiel aus zwei Leistenteilen, worauf später zu Fig. 5 näher eingegangen wird. Mit 5 sind die elektrischen Kontakte bezeichnet.

Die Fig. 3 zeigt eine Vorderansicht einer Flachzelle 2 mit dem Foliengehäuse 3 und der umlaufenden Siegelnaht 4 sowie mit den oben herausragenden elektrischen Kontakten 5, 6. An den seitlichen Rändern der Flachzelle 2 sind an der jeweiligen Siegelnaht 4 die Halteleisten 9 befestigt. Am unteren Ende stehen die Halteleisten 9 über den äußeren Rand der Siegelnaht 4 hervor und weisen eine Abstützfläche 10 auf, mittels derer die Halteleisten 9 und somit auch die Flachzelle 2 auf einem Boden des Gehäuses abgestützt sind. Dadurch wird verhindert, dass die Siegelnaht 4 auf den Boden des Gehäuses gedrückt und möglicherweise beschädigt wird. Am oberen Ende stehen die Halteleisten über die Kontur der oberen Siegelnaht 4 hervor und bilden Anlageflächen 11 für einen das Gehäuse verschließenden Deckel. Der Überstand, den die Anlageflächen 10, 11 zum äußeren Rand der Siegelnaht 4 aufweisen, kann etwa 0,5 mm bis 1,5 mm aufweisen und liegt bevorzugt bei etwa 1,0 mm.

Fig. 4 zeigt eine Ansicht der Flachzelle 2 in Richtung des Pfeils IV in Fig. 1. Für gleiche Teile stimmen die Bezugszeichen mit denjenigen der Fig. 3 überein. Aus Fig. 4 ist ersichtlich, dass die seitlichen Abschnitte der Siegelnaht 4 in den Halteleisten 9 aufgenommen sind und somit die Flachzelle 2 mit den Halteleisten 9 eine Einheit bildet, die in die Aufnahmenuten 8 des Gehäuses 7 (vgl. Fig. 2) einschiebbar ist.

Die Fig. 5 zeigt eine vergrößerte Darstellung der Einzelheit V in Fig. 4. Daraus ist ersichtlich, dass die Halteleiste 9 aus zwei Leistenteilen 12 bestehen kann, wobei im Ausführungsbeispiel das Profil der Leistenteile 12 gleich ist. Die Leistenteile 12 sind an einer Anlagefläche 13 zusammengefügt und weisen jeweils einen auf die Flachzelle bzw. das Foliengehäuse 3 gerichteten Schenkel 14 des Profils auf, wobei zwischen den Schenkeln 14 der zusammengefügten Leistenteile 12 ein Spalt 15 zur Aufnahme der Siegelnaht 4 gebildet ist. Die Leistenteile 12 können zusammengeklemmt, geklipst oder vorzugsweise zusammengeklebt werden, um die Halteleiste 9 zu bilden. Zum Ausgleich von Toleranzen, die im Produktionsprozess auftreten können, ist es vorteilhaft, einen spaltfüllenden Kleber 16 vorzusehen, wodurch auch die Verbindung von Halteleisten 9 mit der Siegelnaht 4 verbessert wird.

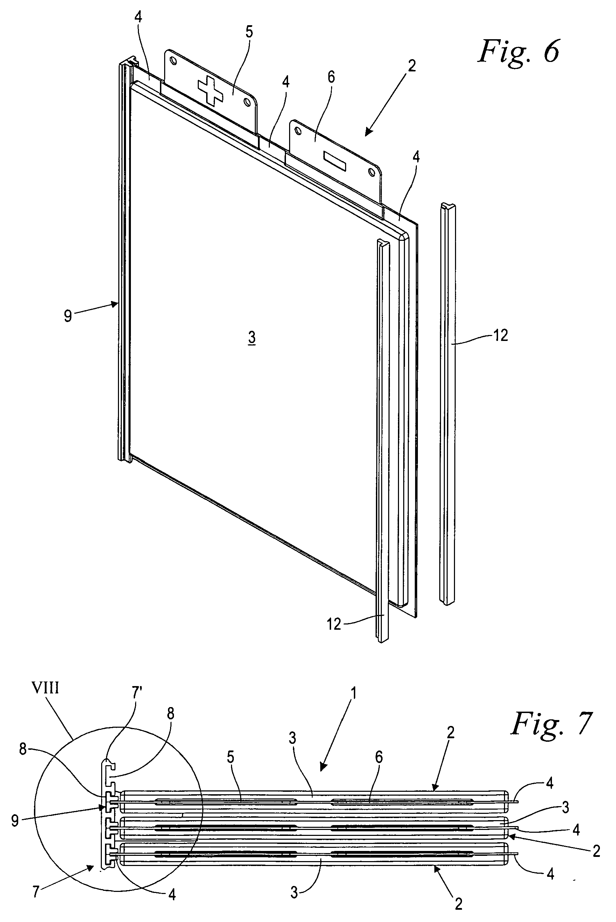

In Fig. 6 ist die Flachzelle 2 an ihrer linken Seite mit der Halteleiste 9 versehen, und auf der rechten Seite sind die beiden Leistenteile 12 noch an der Siegelnaht 4 anzubringen. Die Leistenteile 12 bestehen vorzugsweise aus Kunststoff und werden als endloser Strang hergestellt und auf die gewünschte Länge geschnitten. Im Übrigen stimmen die Bezugszeichen für gleiche Teile mit denjenigen der Fig. 3 überein.

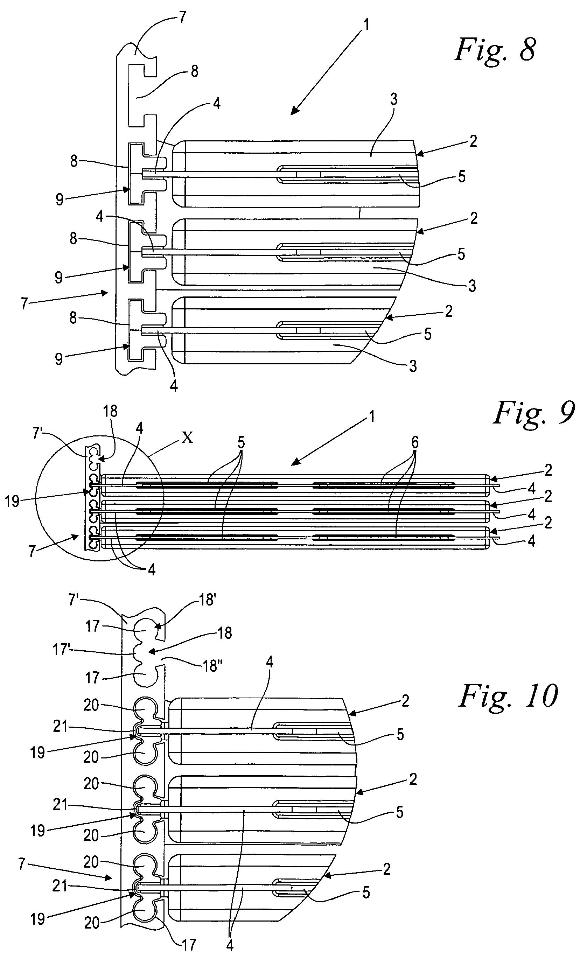

Die Fig. 7 zeigt eine Ansicht auf mehrere Flachzellen 2 eines Akkupacks 1 von oben, d. h. auf die elektrischen Kontakte 5, 6, wobei auf der linken Seite der Flachzellen 2 ein Abschnitt des Gehäuses 7 bzw. der Gehäusewand 7' zu sehen ist. An der Innenseite der Gehäusewand 7' befinden sich die Aufnahmenuten 8, in die die an den Flachzellen 2 bzw. den Siegelnähten 4 befestigten Halteleisten 9 eingeschoben sind. Es ist ersichtlich, dass durch den Formschluss von Aufnahmenuten 8 und Halteleisten 9 die Flachzellen 2 positionsgenau und sicher in dem Gehäuse 7 fixiert sind. Die Fig. 8 zeigt eine vergrößerte Darstellung der Einzelheit VIII in Fig. 7, wobei für gleiche Teile die Bezugszeichen denjenigen in Fig. 5 und 7 entsprechen. Die Ausführung der Halteleisten 9 ist wie zur Fig. 5 beschrieben ausgeführt.

Fig. 9 zeigt eine Ausführungsvariante zu Fig. 7 und Fig. 10 eine vergrößerte Darstellung der Einzelheit X in Fig. 9. Bei dieser Ausführung ist die Gehäusewand 7' des Gehäuses 7 mit Aufnahmenuten 18 versehen, die einen Innenabschnitt 18' und einen Schlitz 18" umfassen. Der Innenabschnitt 18' besteht aus zwei im Wesentlichen kreisförmigen Außenbereichen 17 und einem konkaven Mittenbereich 17', wobei der Innenabschnitt 18' breiter ausgeführt ist als der Schlitz 18", vergleichbar mit der Darstellung in Fig. 2 bzw. 8. In Fig. 9 ist die Ansicht von oben auf den Ausschnitt des Akkupacks 1 mit drei Flachzellen 2 gerichtet, d. h. auf die elektrischen Kontakte 5, 6. Links sind in Fig. 9 an den Flachzellen 2 Halteleisten 19 angeordnet, die zwischen sich die Siegelnaht 4 der jeweiligen Flachzelle 2 einschließen und in die Aufnahmenut 18 geschoben sind. Aus Fig. 10 ist ersichtlich, dass die Halteleiste 19 zwei Haltebacken 20 umfasst, die über ein Filmscharnier 21 verbunden sind. Auf diese Weise sind die Haltebacken 20 beweglich verbunden, so dass die Haltebacken 20 zur Anlage an die Siegelnaht 4 gebracht und mit dieser verklebt werden können. Die Flachzelle 2 kann mit der an der Siegelnaht 4 befestigten Halteleiste 19 in die Aufnahmenut 18 eingeschoben werden. Da das Filmscharnier 21 nur eine geringe Dicke hat, ist der erforderliche Bauraum für die Gehäusewand 7' gering. Die Gehäusewand 7' kann bis fast an die Siegelnaht 4 heranrücken. Das bedeutet eine kompaktere Bauweise des Akkublocks 1 und höhere Leistungsdichte. Die Gestaltung der mit den Halteleisten 19 bestückten Aufnahmenuten 18 ist identisch mit denjenigen, wie sie in Fig. 10 als unbestückte Aufnahmenut 18 detailliert darstellt ist. Im Übrigen stimmen die Bezugszeichen für gleiche Teile mit denjenigen der Fig. 7 und 8 überein.

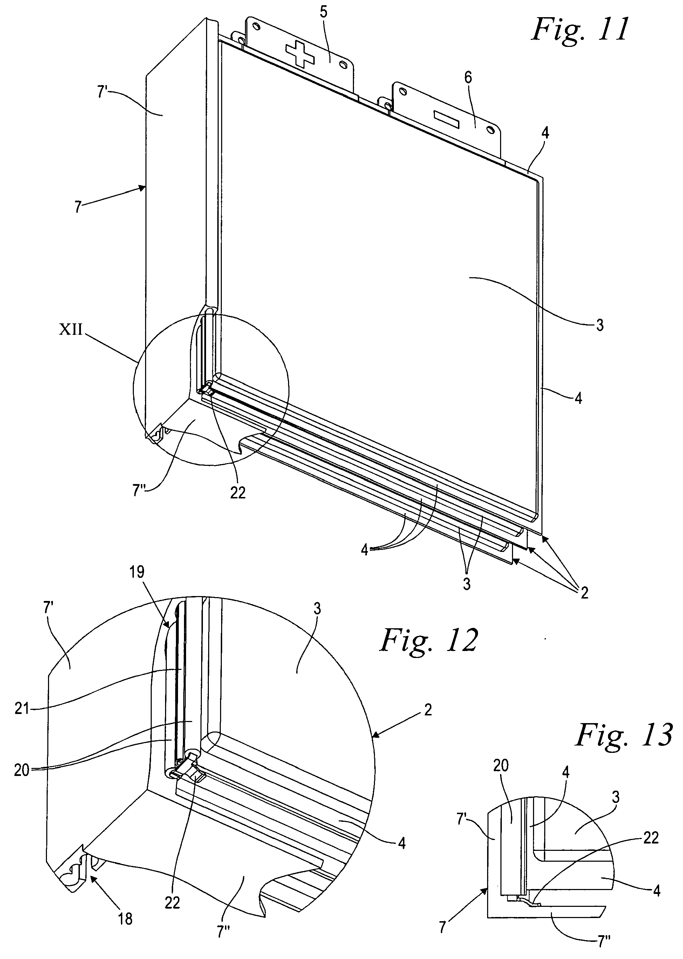

Die Fig. 11 zeigt eine Anordnung gemäß Fig. 1 schräg von unten, so dass noch ein Abschnitt eines Gehäusebodens 7" zu sehen ist. Allerdings ist in Fig. 11 die Gehäusewand 7' mit Aufnahmenuten 18 versehen, wie sie in Fig. 10 dargestellt sind, und dementsprechend sind an den Flachzellen 2 Halteleisten 19 vorgesehen. Am unteren Ende der Halteleisten 19 ist eine Feder 22 angebracht, die zur Abstützung auf dem Gehäuseboden 7" vorgesehen ist, wie dies aus Fig. 13 deutlich wird. Die Feder 22 dient zur Dämpfung und Abfederung von Stößen, die auf den Akkupack bzw. die Flachzellen 2 einwirken. Aus Fig. 13 ist ersichtlich, dass durch die Ausbildung des Endes der Halteleisten 19 und der Feder 22 die Flachzelle 2 bzw. deren Siegelnaht 4 einen Abstand zum Gehäuseboden 7" aufweist. Fig. 12 zeigt eine vergrößerte Darstellung der Einzelheit XII in Fig. 11, wobei die Bezugszeichen für gleiche Teile mit denjenigen der Fig. 10 und 11 übereinstimmen.

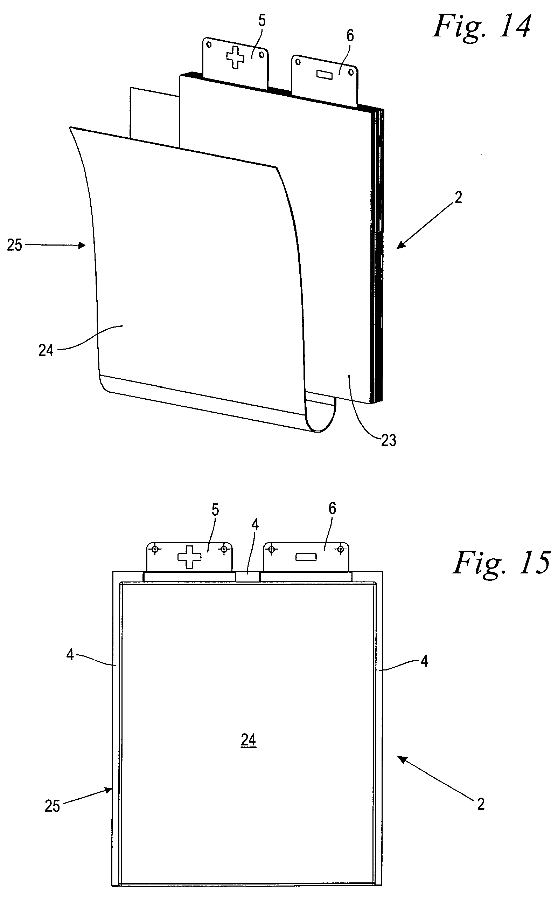

Die Fig. 14 zeigt eine aus einer Vielzahl von wechselweise geschichteten Folien gebildete Flachzelle 2 mit den elektrischen Kontakten 5, 6. Ein solches in bekannter Weise aus Anodenfolien, Kathodenfolien und Separatorfolien aufgebautes Folienpaket 23 wird in ein Foliengehäuse 25 eingebracht und dieses hermetisch geschlossen, damit die zwischen den Folien des Folienpakets 23 eingebrachte Elektrolytlösung nicht entweichen kann. Bei der in Fig. 14 gezeigten Darstellung wird eine Folie 24 als Foliengehäuse 25 an der Unterseite des Folienpakets 23 umgeschlagen und an den Flachseiten des Folienpakets 23 angelegt, so dass die Folie 24 an den seitlichen Rändern und am oberen Rand jeweils auseinanderliegende Randbereiche bildet, an denen die Siegelnaht 4 (vgl. Fig. 15) erzeugt werden kann.

In Fig. 15 ist die fertig gestellte Flachzelle 2 gezeigt, bei der durch das Umschlagen der Folie 24, die das Foliengehäuse 25 bildet, an der Unterseite keine Siegelnaht 4 erzeugt werden muss, weil die Folie 24 dort durchgehend ist und damit die Dichtheit entlang der Unterkante gewährleistet. Nur an den Seiten und oben ist die Siegelnaht 4 herzustellen, um die hermetische Abdichtung zu erreichen. Im Übrigen stimmen für gleiche Teile die Bezugszeichen mit denjenigen der Fig. 14 überein.

## Patentansprüche

1. Flachzelle (2) für einen Akkupack (1), wobei die Flachzelle (2) aus wechselweise aufeinandergeschichteten Anodenfolien und Kathodenfolien besteht, die jeweils durch Separatorfolien voneinander getrennt und in einem Foliengehäuse (3, 25) angeordnet sind, und das Foliengehäuse (3, 25) eine dicht schließende Siegelnaht (4) aufweist, wobei an beiden seitlichen Siegelnähten (4) des Foliengehäuses (3, 25) Halteleisten (9, 19) angebracht sind,
**dadurch gekennzeichnet, dass** die Halteleisten (9, 19) aus zwei Leistenteilen (12) bestehen, die an der Siegelnaht (4) zusammengefügt sind, wobei die Leistenteile (12) mit einem zur Flachzelle (2) gerichteten Schenkel (14) versehen sind und zwischen den Schenkeln (14) der zusammengefügten Leistenteile (12) ein Spalt (15) gebildet ist, in dem die Siegelnaht (4) aufgenommen ist.

2. Flachzelle nach Anspruch 1,
**dadurch gekennzeichnet, dass** ein den Spalt (15) füllender Kleber (16) vorgesehen ist.

3. Akkupack (1), bestehend aus einer Mehrzahl einzelner Flachzellen (2) nach Anspruch 1 oder 2,
**dadurch gekennzeichnet, dass** die Flachzellen (2) in einem gemeinsamen Gehäuse (7) mechanisch gehalten sind, und in dem Gehäuse (7) Vorrichtungen zur Aufnahme der Halteleisten (9, 19) vorgesehen sind.

4. Akkupack nach Anspruch 3,
**dadurch gekennzeichnet, dass** die Vorrichtungen zur Aufnahme der Halteleisten (9, 19) an der Innenseite einer Gehäusewand (7') ausgebildete Aufnahmenuten (8, 18) sind.

5. Akkupack nach Anspruch 3 oder 4,
**dadurch gekennzeichnet, dass** die Halteleisten (9, 19) mindestens mit einem ihrer Enden über den Rand der Siegelnaht (4) überstehen und Anlageflächen (10, 11) zur Abstützung an einem Gehäuseboden (7") oder Gehäusedeckel aufweisen.

6. Akkupack nach Anspruch 5,
**dadurch gekennzeichnet, dass** die Enden der Halteleisten (9, 19) etwa 0,5 mm bis etwa 1,5 mm, vorzugsweise 1,0 mm überstehen.

7. Akkupack nach einem der Ansprüche 3 bis 6,
**dadurch gekennzeichnet, dass** die Halteleisten (9, 19) aus Kunststoff bestehen und als Strangmaterial hergestellt und auf gewünschte Länge geschnitten oder als Spritzgussteil hergestellt sind.

8. Akkupack nach einem der Ansprüche 4 bis 7,
**dadurch gekennzeichnet, dass** die Aufnahmenuten (8, 18) jeweils einen breiteren Innenabschnitt (8', 18') und einen engeren Schlitz (8", 18") aufweisen, wobei die Halteleisten (9, 19) in die Aufnahmenuten (8, 18) in deren Längsrichtung einschiebbar sind.

9. Akkupack nach Anspruch 3,
**dadurch gekennzeichnet, dass** die Leistenteile (12) identische Profile aufweisen und an einer Anlagefläche (13) zusammengefügt sind.

10. Akkupack nach einem der Ansprüche 3 bis 9,
**dadurch gekennzeichnet, dass** die Halteleisten (9, 19) mit der Siegelnaht (4) der Flachzelle (2) mittels eines Klebers verbunden sind.

## Claims

1. Flat cell (2) for a battery pack (1), wherein the flat cell (2) is composed of anode foils and cathode foils layered alternately one of top of the other, each being separated by separator foils and being arranged in a foil housing (3, 25), and the foil housing (3, 25) has a tightly closing sealed seam (4), wherein holding strips (9, 19) are attached to both lateral sealed seams (4) of the foil housing (3, 25), **characterised in that** the holding strips (9, 19) are composed of two strip parts (12) which are joined together at the sealed seam (4), wherein the strip parts (12) are provided with a leg (14) orientated towards the flat cell (2) and a gap (15) is formed between the legs (14) of the joined-together strip parts (12), the sealed seam (4) being received in the gap (15).

2. Flat cell according to claim 1,
**characterised in that** an adhesive (16) that fills the gap (15) is provided.

3. Battery pack (1), composed of a plurality of single flat cells (2) according to claim 1 or 2,
**characterised in that** the flat cells (2) are mechanically held in a common housing (7), and devices for receiving the holding strips (9, 19) are provided in the housing (7).

4. Battery pack according to claim 3,
**characterised in that** the devices for receiving the holding strips (9, 19) are receiving grooves (8, 18) formed on the inner side of a housing wall (7').

5. Battery pack according to claim 3 or 4,
**characterised in that** the holding strips (9, 19) project at least with one of their ends over the edge of the sealed seam (4) and have abutment surfaces (10, 11) for support against a housing base (7") or housing cover.

6. Battery pack according to claim 5,
**characterised in that** the ends of the holding strips (9, 19) project by approximately 0.5 mm to approximately 1.5 mm, preferably 1.0 mm.

7. Battery pack according to one of claims 3 to 6,
**characterised in that** the holding strips (9, 19) are made of plastic and produced as extruded material and cut to the desired length or produced as injection moulded parts.

8. Battery pack according to one of claims 4 to 7,
**characterised in that** the receiving grooves (8, 18) each have a wider inner portion (8', 18') and a narrower slot (8", 18"), wherein the holding strips (9, 19) can be slid into the receiving grooves (8, 18) in the longitudinal direction thereof.

9. Battery pack according to claim 3,
**characterised in that** the strip parts (12) have identical profiles and are joined together at an abutment surface (13).

10. Battery pack according to one of claims 3 to 9,
**characterised in that** the holding strips (9, 19) are connected to the sealed seam (4) of the flat cell (2) by means of an adhesive.

## Revendications

1. Cellule plate (2) pour bloc d'accumulateurs (1), étant précisé que la cellule plate (2) se compose d'une alternance de feuilles anodiques et de feuilles cathodiques qui sont séparées par des feuilles de séparation et qui sont disposées dans un boîtier de feuilles (3, 25), et que le boîtier de feuilles (3, 25) présente un joint soudé (4) étanche, étant précisé que des baguettes de fixation (9, 19) sont installées sur les deux joints soudés (4) latéraux du boîtier de feuilles (3, 25), **caractérisée en ce que** les baguettes de fixation (9, 19) se composent de deux parties de baguettes (12) qui sont assemblées au niveau du joint soudé (4), étant précisé que les parties de baguettes (12) sont pourvues d'une branche (14) dirigée vers la cellule plate (2), et qu'un interstice (15) est formé entre les branches (14) des parties de baguettes (12) assemblées, dans lequel le joint soudé (4) est logé.

2. Cellule plate selon la revendication 1,
**caractérisée en ce qu'**il est prévu une colle (16) qui remplit l'interstice (15).

3. Bloc d'accumulateurs (1) composé de plusieurs cellules plates (2) individuelles selon la revendication 1 ou 2,
**caractérisé en ce que** les cellules plates (2) sont maintenues mécaniquement dans un boîtier commun (7), et **en ce qu'**il est prévu dans le boîtier (7) des dispositifs pour loger les baguettes de fixation (9, 19).

4. Bloc d'accumulateurs selon la revendication 3,
**caractérisé en ce que** les dispositifs pour loger les baguettes de fixation (9, 19) sont des rainures de logement (8, 18) formées sur le côté intérieur d'une paroi de boîtier (7').

5. Bloc d'accumulateurs selon la revendication 3 ou 4,
**caractérisé en ce que** les baguettes de fixation (9, 19), à l'une au moins de leurs extrémités, dépassent du bord du joint soudé (4), et présentent des surfaces d'application (10, 11) pour un appui sur un fond de boîtier (7") ou un couvercle de boîtier.

6. Bloc d'accumulateurs selon la revendication 5,
**caractérisé en ce que** les extrémités des baguettes de fixation (9, 19) dépassent d'environ 0,5 mm à environ 1,5 mm, de préférence de 1,0 mm.

7. Bloc d'accumulateurs selon l'une des revendications 3 à 6,
**caractérisé en ce que** les baguettes de fixation (9, 19) sont en matière plastique et sont fabriquées sous la forme d'un matériau en barre et sont coupées à la longueur voulue, ou sont fabriquées sous la forme de pièces moulées par injection.

8. Bloc d'accumulateurs selon l'une des revendications 4 à 7,
**caractérisé en ce que** les rainures de logement (8, 18) présentent chacune une section intérieure plus large (8', 18') et une fente plus étroite (8", 18"), étant précisé que les baguettes de fixation (9, 19) sont aptes à être glissées dans les rainures de logement (8, 18) dans le sens longitudinal de celles-ci.

9. Bloc d'accumulateurs selon la revendication 3,
**caractérisé en ce que** les baguettes de fixation (12) présentent des profils identiques et sont assemblées au niveau d'une surface d'application (13).

10. Bloc d'accumulateurs selon l'une des revendications 3 à 9,
**caractérisé en ce que** les baguettes de fixation (9, 19) sont reliées au joint soudé (4) de la cellule plate (2) à l'aide d'une colle.
